# EUROPÄISCHE PATENTSCHRIFT

(11) **EP 0 816 853 B1**
(45) Veröffentlichungstag und Bekanntmachung des Hinweises auf die Patenterteilung: **12.12.2007**
(21) Anmeldenummer: 97105510.8
(22) Anmeldetag: 03.04.1997
(51) Int. Cl.: G01N 35/10, B08B 3/04

(54) **Strömungsdämpfer für Spülstation**
Flow retarder for a rinsing station
Ralentisseur de débit pour une station de rinçage

(30) Priorität: 30.04.1996 DE 19617206
(43) Veröffentlichungstag der Anmeldung: 07.01.1998
(73) Patentinhaber: Dade Behring Marburg GmbH, 35001 Marburg (DE)
(72) Erfinder: Gross, Jürgen, Dr., 65719 Hofheim (DE); Bickoni, Dieter, 65239 Hochheim (DE); Neuberger, Heinz, 65618 Selters (DE); Wilmes, Hugo, 65812 Bad Soden (DE); Königstein, Helmut, 35415 Pohlheim (DE); Schleicher, Martin, 61381 Friedrichsdorf (DE)

(56) Entgegenhaltungen:
- WO-A-97/03766
- US-A- 4 730 631
- US-A- 5 133 373

## Beschreibung

Die Erfindung betrifft einen Strömungsdämpfer für eine Spülstation, insbesondere zum Reinigen von Pipettorspitzen, wobei eine Reinigungsflüssigkeit durch eine Pipettornadel in die Spülstation eingebracht wird und die Pipettorspitze umströmt, bevor sie aus der Spülstation abgeführt wird, sowie eine Spülstation mit einem solchen Strömungsdämpfer.

Nach der Verarbeitung von Reagenzien oder Patientenproben müssen die hiermit in Kontakt getretenen Pipettorspitzen gereinigt werden, bevor sie für die Verarbeitung weiterer Reagenzien oder Proben genutzt werden können. Die Reinigung der Pipettorspitzen erfolgt üblicherweise in Überlaufspülstationen mit zylindrischen Überlaufgefäßen, in welche Reinigungsflüssigkeit mit hoher Geschwindigkeit durch die Pipettornadel eingespritzt wird, sich dort sammelt und die Pipettornadel von außen umströmt und reinigt, bevor sie über einen Überlauf abgeführt wird. Derartige zylindrische Überlaufspülstationen für Pipettorspitzen sind z. B. in den Dokumenten US 5,133,373 und WO 97/037 66 beschrieben.

Aufgrund der zur Innenreinigung der Pipettornadel erforderlichen hohen Strömungsgeschwindigkeiten entstehen in den Überlaufgefäßen starke Turbulenzen, die an der Oberfläche Wellen, Blasen und Spritzer erzeugen. Hierdurch werden auch die oberen, nicht zu reinigenden Isolationsflächen der Pipettornadel und einer zur Positionsbestimmung der Pipettornadel in der Spülstation aber vor allem auch an anderen Verarbeitungsstationen genutzten Leveldetektorelektrode mit Flüssigkeit benetzt. Das Dokument US 4,730,631 beschreibt eine Spülstation mit einem Spritzschutzmechanismus, der aus einer Kombination eines speziell geformten Spülgefäßes und einer kegelförmigen Erhebung auf dem Boden des Spülgefäßes besteht.

Abgesehen davon, daß die Flüssigkeitsbenetzung zu einer Verschleppung von Reagenzien oder Patientenproben führen kann, beeinträchtigt die an den Isolationsflächen der Pipettornadel und der Leveldetektorelektrode haftende Flüssigkeit die auf einer Potentialmessung basierende Leveldetektion, indem sie einen Kurzschluß erzeugt, der eine zuverlässige Positionsmessung unmöglich macht.

Aufgabe der Erfindung ist es daher, derartige Leveldetektions- und Verschleppungsprobleme in Spülstationen zum Reinigungen von Pipettorspitzen zu vermeiden.

Diese Aufgabe wird mit der Erfindung im wesentlichen dadurch gelöst, daß in dem Strömungsdämpfer der Spülstation wenigstens ein Sieb mit einer vorzugsweise zentralen Eintrittsöffnung für den aus der Pipettornadel austretenden Flüssigkeitsstrahl und eine Einrichtung zum Umlenken des Flüssigkeitsstroms in dem eintretenden Flüssigkeitsstrahl im wesentlichen entgegengesetzte Richtung vorgesehen sind, und daß in dem wenigstens einen Sieb eine Mehrzahl vorzugsweise radial um die Eintrittsöffnung angeordneter Austrittsöffnungen für den umgelenkten Flüssigkeitsstrom ausgebildet ist.

Durch die Umlenkung des Flüssigkeitsstroms und das vorgesehene Sieb, durch das der Flüssigkeitsstrom hindurchtreten muß, wird eine wesentliche Beruhigung der Strömung erreicht, so daß eine Benetzung der Isolationsflächen der Pipettornadel und der Leveldetektorelektrode vermieden wird.

Eine weiter verstärkte Strömungsdämpfung wird bei einer bevorzugten Ausgestaltung der Erfindung dadurch erreicht, daß zwei Siebe übereinander angeordnet sind und zwischen sich einen Strömungsraum bilden.

Vorzugsweise sind hierbei die Austrittsöffnungen der beiden Siebe jeweils azimutal versetzt zueinander angeordnet, so daß die Flüssigkeit nicht gerade durch beide Siebe hindurchströmen kann, sondern durch die zusätzliche Umlenkung noch stärker beruhigt wird.

Die Gefahr der Benetzung der Leveldetektorelektrode mit Reinigungsflüssigkeit kann dadurch weiter verringert werden, daß in einem (der Leveldetektorelektrode zugeordneten) Umfangsbereich jedenfalls das obere Sieb keine Austrittsöffnung aufweist. Somit tritt im Bereich der Leveldetektorelektrode keine Flüssigkeit durch das obere Sieb, so daß sich hier allenfalls minimal Wellen, Blasen und Spritzer bilden.

Um ein ungehindertes Ausströmen der Flüssigkeit durch die Austrittsöffnungen zu ermöglichen, ist erfindungsgemäß vorgesehen, daß die Summe der Flächen der radial verteilten Austrittsöffnungen eines Siebes größer ist als die Fläche der Eintrittsöffnung dieses Siebes.

Die Umlenkung des durch die Eintrittsöffnung der Siebe eingebrachten Flüssigkeitsstrahles erfolgt in Weiterbildung der Erfindung dadurch, daß unterhalb der Eintrittsöffnung des untersten Siebes ein zur Eintrittsöffnung weisender Kegel oder dergleichen vorgesehen ist, über den der eintretende Flüssigkeitsstrahl radial nach außen umgelenkt wird. An den Wänden des Strömungsdämpfers wird der Flüssigkeitsstrom dann weiter umgelenkt, so daß er nach oben durch die Austrittsöffnungen in den Sieben abfließen kann.

Um den abfließenden Flüssigkeitsstrom gezielt einer Überlaufstrecke zuführen zu können, schließen sich erfindungsgemäß an eine Überlaufkante für die ablaufende Flüssigkeit erhöhte Seitenwände an.

Eine einfache Herstellung und Nachrüstbarkeit auch bestehender Spülstationen läßt sich mit der Erfindung dadurch erreichen, daß der Strömungsdämpfer als Einsatz aus mehreren Einzelelementen, insbesondere aus Kunststoff, ausgebildet ist, die beispielsweise über eine Steck- oder Klebverbindung miteinander verbunden sind.

Hierbei wird der Strömungsdämpfer vorzugsweise in eine entsprechende Aussparung in der Spülstation eingesetzt.

Eine definierte Strömung der Reinigungsflüssigkeit wird erfindungsgemäß dadurch erreicht, daß der Strömungsdämpfer gegenüber der Ausnehmung abgedichtet ist.

Eine weitere Verbesserung des Ablaufverhaltens der Reinigungsflüssigkeit wird durch eine verbesserte Formgebung einer Überlaufstrecke zur Aufnahme der aus dem Strömungsdämpfer abfließenden Flüssigkeit erreicht. Hierbei kann die Überlaufkante des Strömungsdämpfers bündig mit einer Überlaufkante der Ausnehmung in der Spülstation angeordnet sein oder etwas unterhalb der Überlaufkante der Ausnehmung liegen. Im Gegensatz zu den bisher eingesetzten Spülstationen, bei denen ein zylindrischer Rohreinsatz in die Spülstation eingesetzt wurde und sich jeweils zu Beginn der Spülprozesse ein nach oben gewölbter Flüssigkeitsberg bildete, der erst nach Überwindung der Oberflächenspannung durch Auslaufen über die schräge Fläche im zweiten Teil des Spülprozesses abgetragen wurde, kann durch Absenken des Einsatzes unter die Überlaufkante der Ausnehmung in der Spülstation und Anbringen einer Überlaufstrecke in der Spülstation die Flüssigkeitsüberwölbung zu Beginn des Spül-prozesses ausgeglichen werden, so daß sich während des gesamten Spülprozesses ein stabiler Pegel einstellt. Auch dies trägt dazu bei, eine Benetzung der Isolationsflächen der Leveldetektion zu verhindern.

Weiterbildungen, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: einen Schnitt durch einen erfindungsgemäßen Strömungsdämpfer mit angedeuteter Pipettornadel und Überlaufkante der Spülstation,

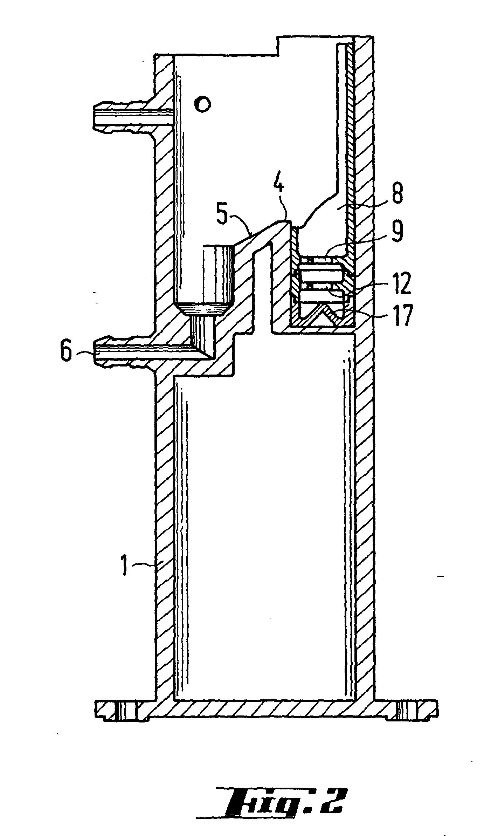

- Fig. 2: einen Schnitt durch eine Spülstation mit eingesetztem Strömungsdämpfer,
- Fig. 3: eine Draufsicht auf die Darstellung gemäß Fig. 1 ohne Pipettornadel,
- Fig. 4: eine Draufsicht auf einen mittleren Abschnitt des Strömungsdämpfers,
- Fig. 5: eine Darstellung ähnlich der in Fig. 1, wobei die sich einstellenden Flüssigkeitsniveaus beim Stand der Technik und der Erfindung dargestellt sind.

Die in der Zeichnung dargestellte Spülstation 1 wird zum Reinigen von Pipettornadeln 2 genutzt, indem ein Reinigungsmittel mit hoher Strömungsgeschwindigkeit durch die Pipettornadel 2 in eine in der Spülstation 1 ausgebildete Ausnehmung 3 eingespritzt wird. In der Ausnehmung 3 sammelt sich die Reinigungsflüssigkeit und umspült die Pipettornadel 2 von außen, bevor sie über eine Überlaufkante 4 und eine Überlaufstrecke 5 einem Ablauf 6 zugeführt wird.

Die korrekte Positionierung der Pipettornadel 2 in der Spülstation 1 wird über eine Leveldetektorelektrode 7 gesteuert, die über eine Potentialmessung den Eintritt der Pipettornadel 2 in die Reinigungsflüssigkeit feststellt und beispielsweise an eine elektronische Steuerung weitergibt. Die Leveldetektorelektrode 7 wird auch zur Positionierung der Pipettornadel in späteren Stationen genutzt. Um den Eintritt der Pipettornadel 2 in die Flüssigkeit genau feststellen zu können, muß gewährleistet sein, daß sich an den Isolationsflächen im oberen Bereich der Pipettornadel 2 und der Leveldetektorelektrode 7 keine leitende Flüssigkeit befindet, die zu einem Kurzschluß führen und damit eine eindeutige Messung verhindern würde.

Um zu verhindern, daß sich beim Einspritzen der Reinigungsflüssigkeit starke Turbulenzen und damit verbunden-e Wellen und Blasen an der Oberfläche bilden, die zu einer Benetzung der Isolationsflächen der Pipettornadel 2 und der Leveldetektorelektrode 7 mit leitender Reinigungsflüssigkeit führen, ist in die Ausnehmung 3 der Spülstation 1 ein Strömungsdämpfer 8 eingesetzt.

Der Strömungsdämpfer 8 weist ein oberes Sieb 9 mit einer zentralen Eintrittsöffnung 10 und radial um die Eintrittsöffnung 10 angeordneten Austrittsöffnungen 11 auf, sowie ein darunter angeordnetes zweites Sieb 12 ebenfalls mit einer zentralen Eintrittsöffnung 13 und radial um diese Eintrittsöffnung 13 angeordneten Austrittsöffnungen 14. Zwischen den Sieben 9, 12 ist ein erster Strömungsraum 15 vorgesehen. Unter dem zweiten Sieb 12 ist ein zweiter Strömungsraum 16 vorgesehen, der nach unten von einem koaxial mit den Eintrittsöffnungen 10, 13 angeordneten, nach oben weisenden Kegel 17 begrenzt wird. Wie sich aus den Fig. 3 und 4 ergibt, sind die Austrittsöffnungen 11, 14 des ersten bzw. zweiten Siebes 9, 12 azimutal zueinander versetzt. Im ersten Sieb 9 ist ferner in dem unter der Leveldetektorelektrode 7 liegenden Bereich keine Austrittsöffnung 11 vorgesehen. Die Fläche der Austrittsöffnungen 11, 14 eines Siebes 9, 12 ist größer als die Fläche der Eintrittsöffnung 10, 13 dieses Siebes 9, 12.

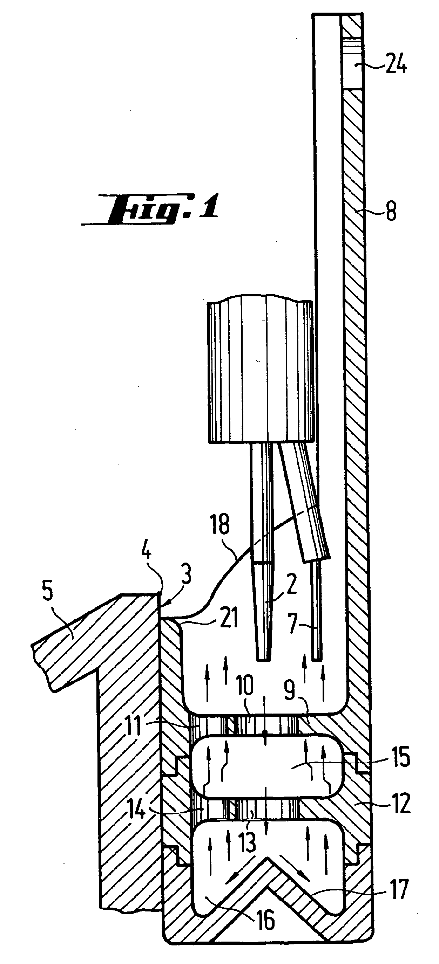

Beim Einspritzen der Reinigungsflüssigkeit durch die Düse mit geringem Querschnitt der Pipettornadel 2 wird die Reinigungsflüssigkeit mit hoher Geschwindigkeit (beispielsweise 1, 6 ml/s) in die Eintrittsöffnung 10 des oberen Siebes 9, und weiter durch den ersten Strömungsraum 15 und die Eintrittsöffnung 13 des zweiten Siebes 12 in den zweiten Strömungsraum 16 geführt, bis sie auf den Kegel 17 trifft und von diesem nach außen umgelenkt wird. An den Seitenwänden des Strömungsdämpfers 8 wird die Flüssigkeit nach oben umgelenkt, wo sie durch die Austrittsöffungen 14 des zweiten Siebes in den ersten Strömungsraum 15 und durch die Austrittsöffnungen 11 des ersten Siebes 9 nach oben geführt wird. In Fig. 1 ist der Strömungsweg der Reinigungsflüssigkeit durch Pfeile angedeutet. Durch die starke Umlenkung des Reinigungsflüssigkeitsstromes und die Siebe 9, 12 werden Turbulenzen gedämpft, so daß sich an der Oberfläche keine wesentlichen Wellen und Blasen bilden, die zu einer Benetzung der Isolationsflächen der Pipettornadel 2 und der Leveldetektorelektrode 7 führen könnten. Durch den azimutalen Versatz der Austrittsöffnungen 11, 14 der Siebe 9 bzw. 12 wird eine weitere Umlenkung des Reinigungsflüssigkeitsstromes bewirkt, die zu einer zusätzlichen Beruhigung führt.

Aus dem Strömungsdämpfer 8 fließt die Reinigungsflüssigkeit über die überlaufkante 4 und die Überlaufstrecke 5 in den Ablauf 6 der Spülstation 1. Über erhöhte Seitenwände 18, 19 des Strömungsdämpfers 8 wird die Reinigungsflüssigkeit gezielt der Überlaufstrecke 5 zugeführt, die durch eine abgestimmte Formgebung zu einer weiteren Beruhigung und Stabilisierung des Flüssigkeitsniveaus sorgt.

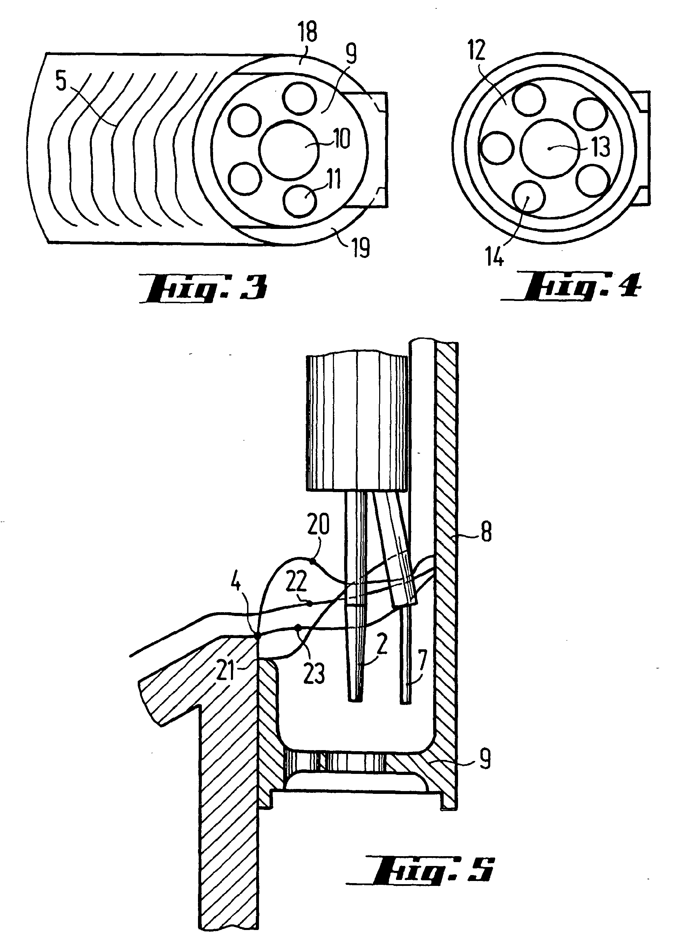

In Fig. 5 sind die sich einstellenden Flüssigkeitsniveaus während des Reinigungsvorgangs dargestellt. Hierbei ist mit 20 ein dem Vergleich dienender, nach oben gewölbter Flüssigkeitsberg bezeichnet, wie er bei den bisher eingesetzten zylindrischen Rohreinsätzen ohne Strömungsdämpfer jeweils zu Beginn des Spülprozesses auftrat. Dieser Flüssigkeitsberg 20 wurde erst nach Überwindung der Oberflächenspannung durch Auslaufen über die Überlaufstrecke im zweiten Teil des Spülprozesses abgetragen. Auch hierdurch wurden die Isolationsflächen der Leveldetektion bedroht.

Bei der dargestellten Ausführungsform ist der Strömungsdämpfer 8 soweit in die Ausnehmung 3 der Spülstation 1 eingesetzt, daß eine Überlaufkante 21 des Strömungsdämpfers 8 etwas unterhalb der Überlaufkante 4 der Ausnehmung 3 liegt. Hierdurch kann die Flüssigkeitsüberwölbung zu Beginn des Spülprozesses ausgeglichen werden, so daß sich während des gesamten Spülprozesses der stabile Pegel 22 einstellt. Nach Abschluß des Spülvorgangs stellt sich der reproduzierbare Pegel 23 ein, der mit der Überlaufkante 4 der Ausnehmung 3 abschließt. Es kann jedoch auch vorgesehen sein, daß die Überlaufkante 21 des Strömungsdämpfers 8 bündig mit der Überlaufkante 4 des Ausnehmung 3 abschließt, wobei aber die Gefahr eines geringfügigen Flüssigkeitsberges ähnlich dem beim Stand der Technik auftretenden Flüssigkeitsberg 20 besteht.

Der Strömungsdämpfer 8 ist aus drei Einzelelementen 9, 12, 17 zusammengesetzt, die beispielsweise durch Spritzgießen aus Kunststoff hergestellt sind und über eine Steck- oder Klebverbindung miteinander verbunden sind. Der Strömungsdämpfer 8 ist als Einsatz ausgebildet, der als ganzes in eine entsprechende Ausnehmung 3 der Spülstation 1 eingesetzt und mit Hilfe einer im oberen Abschnitt des Strömungsdämpfers 8 ausgebildeten Öffnung 24 leicht gewechselt werden kann. Auf diese Weise ist es möglich, auch bereits genutzte Spülstationen 1 mit dem erfindungsgemäßen Strömungsdämpfer 8 nachzurüsten und die dort auftretenden Leveldetektionsfehler zu vermeiden.

Wie sich durch Versuche herausgestellt hat, kann mit dem erfindungsgemäßen Strömungsdämpfer 8 eine deutliche Beruhigung des etwas zur Überlaufkante 4 abfallenden Flüssigkeitspegels 22 festgestellt werden. Benetzungen der Pipettornadel 2 und der Leveldetektorelektrode 7 im oberen Isolationsbereich und eine damit verbundene Störung der Leveldetektion wurden nicht mehr beobachtet.

### Bezugszeichenliste:

- 1: Spülstation
- 2: Pipettornadel
- 3: Ausnehmung
- 4: Überlaufkante
- 5: Überlaufstrecke
- 6: Ablauf
- 7: Leveldetektorelektrode
- 8: Strömungsdämpfer
- 9: erstes Sieb
- 10: Eintrittsöffnung
- 11: Austrittsöffnung
- 12: zweites Sieb
- 13: Eintrittsöffnung
- 14: Austrittsöffnung
- 15: erster Strömungsraum
- 16: zweiter Strömungsraum
- 17: Kegel
- 18: Seitenwand
- 19: Seitenwand
- 20: Flüssigkeitsberg
- 21: Überlaufkante
- 22: Pegel
- 23: Pegel
- 24: Öffnung

## Patentansprüche

1. Strömungsdämpfer für eine Spülstation (1), insbesondere zum Reinigen von Pipettorspitzen, wobei eine Reinigungsflüssigkeit durch eine Pipettornadel (2) in die Spülstation (1) eingebracht wird und die Pipettornadel (2) umströmt, bevor sie aus der Spülstation (1) abgeführt wird, wobei der Strömungsdämpfer (8) eine Einrichtung (17) enthält zum Umlenken des Flüssigkeitsstroms in einer dem eintretenden Flüssigkeitsstrahl im wesentlichen entgegengesetzten Richtung **dadurch gekennzeichnet, daß** der Strömungsdämpfer (8) wenigstens ein Sieb (9, 12) mit einer vorzugsweise zentralen Eintrittsöffnung (10, 13) für den aus der Pipettornadel (2) austretenden Flüssigkeitsstrahl aufweist und in dem wenigstens einen Sieb (9, 12) eine Mehrzahl vorzugsweise radial um die Eintrittsöffnung (10, 13) angeordneter Austrittsöffnungen (11, 14) für den umgelenkten Flüssigkeitsstrom ausgebildet ist.

2. Strömungsdämpfer nach Anspruch 1, **dadurch gekennzeichnet, daß** zwei Siebe (9, 12) übereinander angeordnet sind und zwischen sich einen Strömungsraum (15) bilden.

3. Strömungsdämpfer nach Anspruch 2, **dadurch gekennzeichnet, daß** die Austrittsöffnungen (11, 14) der beiden Siebe (9, 12) jeweils azimutal versetzt zueinander angeordnet sind.

4. Strömungsdämpfer nach einem der Ansprüche 1 bis 3, **dadurch gekennzeichnet, daß** in einem Umfangsbereich jedenfalls des oberen Siebes (9) keine Austrittsöffnung (11) vorgesehen ist.

5. Strömungsdämpfer nach einem der Ansprüche 1 bis 4, **dadurch gekennzeichnet, daß** die Summe der Flächen der radial verteilten Austrittsöffnungen (11, 14) eines Siebes (9, 12) größer ist als die Fläche der Eintrittsöffnung (10, 13) dieses Siebes (9, 12).

6. Strömungsdämpfer nach einem der Ansprüche 1 bis 5, **dadurch gekennzeichnet, daß** unterhalb der Eintrittsöffnung (13) des unteren Siebes (12) ein zur Eintrittsöffnung (13) weisender Kegel (17) oder dergleichen vorgesehen ist, über den der eintretende Flüssigkeitsstrahl radial nach außen umgelenkt wird.

7. Strömungsdämpfer nach einem der Ansprüche 1 bis 6, **gekennzeichnet durch** erhöhte Seitenwände (18, 19), die sich an eine Überlaufkante (4) der Spülstation (1) anschließen.

8. Strömungsdämpfer nach einem der Ansprüche 1 bis 7, **dadurch gekennzeichnet, daß** er als Einsatz aus mehreren Einzelelementen (9, 12, 17) insbesondere aus Kunststoff ausgebildet ist, die beispielsweise über eine Steck- oder Klebverbindung miteinander verbunden sind.

9. Spülstation, insbesondere zum Reinigen von Pipettorspitzen, wobei eine Reinigungsflüssigkeit durch eine Pipettornadel (2) in die Spülstation (1) eingebracht wird und die Pipettornadel (2) umströmt, bevor sie aus der Spülstation (1) abgeführt wird, **gekennzeichnet durch** einen Strömungsdämpfer (8) nach einem der vorhergehenden Ansprüche, der als Einsatz in die Spülstation (1) eingesetzt ist.

10. Spülstation nach Anspruch 9, **dadurch gekennzeichnet, daß** der Strömungsdämpfer (8) in eine entsprechende Ausnehmung (3) in der Spülstation (1) eingesetzt ist.

11. Spülstation nach Anspruch 9 oder 10, **dadurch gekennzeichnet, daß** der Strömungsdämpfer (8) gegenüber der Ausnehmung (3) abgedichtet ist.

12. Spülstation nach einem der Ansprüche 9 bis 11, **gekennzeichnet durch** eine Überlaufstrecke (5) zur Aufnahme der aus dem Strömungsdämpfer (8) abfließenden Flüssigkeit.

13. Spülstation nach einem der Ansprüche 9 bis 12, **dadurch gekennzeichnet, daß** eine Überlaufkante (21) des Strömungsdämpfers (8) bündig mit einer Überlaufkante (4) der Ausnehmung (3) abschließt.

14. Spülstation nach einem der Ansprüche 9 bis 12, **dadurch gekennzeichnet, daß** eine Überlaufkante (4) der Ausnehmung (3) etwas höher liegt, als eine Überlaufkante (21) des Strömungsdämpfers (8).

## Claims

1. Flow damper for a cleaning station (1), in particular for cleaning pipettor tips, a cleaning liquid being introduced into the cleaning station (1) through a pipettor needle (2) and flowing around the pipettor needle (2) before it is conducted away out of the cleaning station (1), wherein the flow damper (8) contains a device (17) for diverting the liquid flow in a direction essentially opposite to that of the entering jet of liquid, **characterized in that** the flow damper (8) has at least one screen (9, 12) having a preferably central entry orifice (10, 13) for the jet of liquid emerging from the pipettor needle (2) and a plurality of exit orifices (11, 14), preferably arranged radially around the entry orifice (10, 13), for the diverted liquid flow are formed in the at least one screen (9, 12).

2. Flow damper according to Claim 1, **characterized in that** two screens (9, 12) are arranged one above the other, forming a flow space (15) between them.

3. Flow damper according to Claim 2, **characterized in that** the exit orifices (11, 14) of the two screens (9, 12) are arranged in each case azimuthally offset relative to one another.

4. Flow damper according to any of Claims 1 to 3, **characterized in that** no exit orifice (11) is provided in one circumferential region at least of the upper screen (9).

5. Flow damper according to any of Claims 1 to 4, **characterized in that** the sum of the areas of the radially distributed exit orifices (11, 14) of a screen (9, 12) is larger than the area of the entry orifice (10, 13) of said screen (9, 12).

6. Flow damper according to any of Claims 1 to 5, **characterized in that** a cone (17) or the like, pointing toward the entry orifice (13), is provided below the entry orifice (13) of the lower screen (12), over which cone the entering jet of liquid is diverted radially outward.

7. Flow damper according to any of Claims 1 to 6, **characterized by** raised side walls (18, 19) which adjoin an overflow edge (4) of the cleaning station (1).

8. Flow damper according to any of Claims 1 to 7, **characterized in that** it is designed as an insert comprising a plurality of individual elements (9, 12, 17), in particular made of plastic, which are connected to one another, for example, by means of a plug-in or bonded connection.

9. Cleaning station, in particular for cleaning pipettor tips, a cleaning liquid being introduced into the cleaning station (1) through a pipettor needle (2) and flowing around the pipettor needle (2) before it is conducted away out of the cleaning station (1), **characterized by** a flow damper (8), according to any of the preceding claims, which is inserted as an insert into the cleaning station(1).

10. Cleaning station according to Claim 9, **characterized in that** the flow damper (8) is inserted into a corresponding recess (3) in the cleaning station (1).

11. Cleaning station according to Claim 9 or 10, **characterized in that** the flow damper (8) is sealed off relative to the recess (3).

12. Cleaning station according to any of Claims 9 to 11, **characterized by** an overflow path (5) to receive the liquid flowing off out of the flow damper (8).

13. Cleaning station according to any of Claims 9 to 12, **characterized in that** an overflow edge (21) of the flow damper (8) terminates flush with an overflow edge (4) of the recess (3).

14. Cleaning station according to any of Claims 9 to 12, **characterized in that** an overflow edge (4) of the recess (3) lies slightly higher than an overflow edge (21) of the flow damper (8).

## Revendications

1. Ralentisseur de débit pour une station de rinçage (1), en particulier pour le nettoyage de pointes de pipeteurs, dans lequel un liquide de nettoyage est introduit dans la station de rinçage (1) par une aiguille de pipeteur (2) et s'écoule autour de l'aiguille de pipeteur (2) avant d'être évacué de la station de rinçage (1), lequel ralentisseur de débit (8) contient un dispositif (17) pour dévier le courant de liquide dans un sens sensiblement opposé à celui du jet de liquide entrant, **caractérisé en ce que** le ralentisseur de débit (8) présente au moins un tamis (9, 12) ayant de préférence une ouverture d'entrée centrale (10, 13) pour le jet de liquide sortant de l'aiguille de pipeteur (2) et **en ce que** le au moins un tamis (9, 12) est constitué d'une pluralité d'ouvertures de sortie (11, 14), disposées de préférence radialement autour de l'ouverture d'entrée (10, 13), pour le courant de liquide dévié.

2. Ralentisseur de débit selon la revendication 1, **caractérisé en ce que** deux tamis (9, 12) sont disposés l'un sur l'autre et forment entre eux un espace d'écoulement (15).

3. Ralentisseur de débit selon la revendication 2, **caractérisé en ce que** les ouvertures de sortie (11, 14) des deux tamis (9, 12) sont respectivement soumis à un décalage azimutal mutuel.

4. Ralentisseur de débit selon l'une quelconque des revendications 1 à 3, **caractérisé en ce que** l'on ne prévoit pas d'ouverture de sortie (11) en tout cas dans une zone périphérique du tamis supérieur (9).

5. Ralentisseur de débit selon l'une quelconque des revendications 1 à 4, **caractérisé en ce que** la somme des surfaces des ouvertures de sortie réparties radialement (11, 14) d'un tamis (9, 12) est supérieure à la surface de l'ouverture d'entrée (10, 13) de ce tamis (9, 12).

6. Ralentisseur de débit selon l'une quelconque des revendications 1 à 5, **caractérisé en ce que**, en dessous de l'ouverture d'entrée (13) du tamis inférieur (12), on prévoit un cône (17) ou similaire tourné vers l'ouverture d'entrée (13), par lequel le jet de liquide entrant est dévié radialement vers l'extérieur.

7. Ralentisseur de débit selon l'une quelconque des revendications 1 à 6, **caractérisé par** des parois latérales surélevées (18, 19), qui sont raccordées à une arête de déversement (4) de la station de rinçage (1).

8. Ralentisseur de débit selon l'une quelconque des revendications 1 à 7, **caractérisé en ce qu'**il se présente sous la forme d'une pièce rapportée constituée de plusieurs éléments individuels (9, 12, 17), en particulier en matériau synthétique, qui sont reliés les uns aux autres notamment par un raccord d'enfichage ou de collage.

9. Station de rinçage, en particulier pour le nettoyage de pointes de pipeteurs, dans laquelle un liquide de nettoyage est introduit dans la station de rinçage (1) par une aiguille de pipeteur (2) et s'écoule autour de l'aiguille de pipeteur (2) avant d'être évacué de la station de rinçage (1), **caractérisée par** un ralentisseur de débit (8) selon l'une quelconque des revendications précédentes, qui est utilisé comme pièce rapportée dans la station de rinçage (1).

10. Station de rinçage selon la revendication 9, **caractérisée en ce que** l'on insère le ralentisseur de débit (8) dans un évidement correspondant (3) de la station de rinçage (1).

11. Station de rinçage selon la revendication 9 ou 10, **caractérisée en ce que** le ralentisseur de débit (8) est étanché vis-à-vis de l'évidement (3).

12. Station de rinçage selon l'une quelconque des revendications 9 à 11, **caractérisée par** une section de déversement (5) pour recevoir le liquide s'écoulant du ralentisseur de débit (8).

13. Station de rinçage selon l'une quelconque des revendications 9 à 12, **caractérisée en ce qu'**une arête de déversement (21) du ralentisseur de débit (8) se termine à fleur avec une arête de déversement (4) de l'évidement (3).

14. Station de rinçage selon l'une quelconque des revendications 9 à 12, **caractérisée en ce qu'**une arête de déversement (4) de l'évidement (3) se situe un peu plus haut qu'une arête de déversement (21) du ralentisseur de débit (8).
